Europäisches Patentamt

European Patent Office

Office européen des brevets

(19)

(11) **EP 0 862 307 A1**

# (12) DEMANDE DE BREVET EUROPEEN

(43) Date de publication:
02.09.1998 Bulletin 1998/36

(51) Int. Cl.⁶: **H04M 1/00**, G06F 3/147

(21) Numéro de dépôt: 98200392.3

(22) Date de dépôt: **09.02.1998**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **18.02.1997 FR 9701882**

(71) Demandeur:
**Koninklijke Philips Electronics N.V.**
**5621 BA Eindhoven (NL)**

(72) Inventeur: **André, Jean-Marie**
**75008 Paris (FR)**

(74) Mandataire: **Chaffraix, Jean**
**Société Civile S.P.I.D.**
**156, Boulevard Haussmann**
**75008 Paris (FR)**

(54) **Equipement téléphonique et méthode d'affichage des fonctions et leur paramètres**

(57) L'invention concerne une méthode d'affichage des informations concise et universelle, particulièrement simple d'utilisation.

Elle consiste à associer une représentation symbolique graphique aux fonctions dudit équipement, à associer une représentation symbolique à base de caractères de type alphanumérique aux paramètres qui sont associés à ces fonctions, à afficher une desdites représentations graphiques dans une zone d'affichage de l'écran qui est une zone d'affichage matriciel par points, dite zone graphique (15), et à afficher la représentation à base de caractères du ou des paramètres correspondants dans une zone d'affichage de l'écran qui est une zone d'affichage par segments, dite zone segments (16).

FIG. 1

EP 0 862 307 A1

## Description

L'invention concerne un équipement téléphonique qui est doté d'une pluralité de fonctions pour lesquelles un ou plusieurs paramètres sont susceptibles d'être fixés, et qui comporte un écran notamment utilisé pour afficher des informations relatives auxdites fonctions et auxdits paramètres.

L'invention concerne également une méthode d'affichage, sur un écran d'un équipement téléphonique, d'informations relatives à des fonctions dudit équipement pour lesquelles un ou plusieurs paramètres sont susceptibles d'être fixés.

L'invention permet de simplifier de façon notable l'utilisation de tels équipements téléphoniques, et elle a donc d'importantes applications dans le domaine de la téléphonie grand public.

Le manuel d'utilisation intitulé "Fizz Etacs User Manual" de Septembre 1996 décrit le fonctionnement et le mode d'emploi d'un téléphone commercialisé sous la marque "Fizz" par la société Philips. Comme indiqué dans le paragraphe introductif, ce téléphone est doté d'une pluralité de fonctions pour lesquelles un ou plusieurs paramètres sont susceptibles d'être fixés, et il comporte un écran notamment utilisé pour afficher des informations relatives auxdites fonctions et auxdits paramètres. Ces informations sont affichées sous forme de texte, ou d'icônes pré-dessinées.

L'affichage desdites informations sous forme de texte présente plusieurs inconvénients. Tout d'abord le texte n'a pas de signification universelle et nécessite donc d'être traduit dans chaque langue de commercialisation du produit. De plus, le texte occupe une surface importante sur l'écran. Il implique donc d'utiliser des écrans relativement grands ce qui va à l'encontre de la tendance actuelle de miniaturisation des produits, et ce qui augmente le coût du produit.

Certains de ces inconvénients sont susceptibles d'être éliminés en utilisant des icônes pré-dessinées. Toutefois, le nombre de ces icônes est également limité par la taille de l'écran. De plus, l'utilisation d'icônes pré-dessinées fige l'écran en ce sens qu'une fois l'écran produit, il n'est plus possible de le modifier. Il est donc particulièrement complexe et coûteux de modifier une version d'appareil pour ajouter ou supprimer des fonctions et/ou des paramètres.

L'invention a pour but de remédier à ces inconvénients en proposant un équipement téléphonique qui utilise une méthode d'affichage des informations concise et universelle, particulièrement simple d'utilisation.

Pour cela, un équipement téléphonique selon l'invention et tel que décrit dans le paragraphe introductif est caractérisé en ce que:

- ledit équipement comporte des moyens pour associer une représentation symbolique auxdites fonctions et auxdits paramètres,
- et ledit écran comporte au moins une première zone d'affichage qui est une zone d'affichage matriciel par points pour afficher l'une des représentations symboliques associées auxdites fonctions, et une seconde zone d'affichage pour afficher la ou les représentations symboliques du ou des paramètres correspondants.

De même, une méthode d'affichage selon l'invention et telle que décrite dans le paragraphe introductif est caractérisée en ce qu'elle consiste:

- à associer une représentation symbolique auxdites fonctions, et auxdits paramètres,
- à afficher l'une des représentations symboliques associées auxdites fonctions dans une première zone d'affichage de l'écran, qui est une zone d'affichage matriciel par points,
- et à afficher la ou les représentations symboliques du ou des paramètres correspondants dans une seconde zone d'affichage de l'écran.

Ainsi, l'invention utilise une première zone programmable dans laquelle la représentation symbolique associée à une fonction est susceptible d'être affichée. Les informations relatives aux paramètres qui correspondent à cette fonction sont susceptibles d'être affichées simultanément dans une seconde zone d'affichage.

L'invention permet donc d'utiliser une représentation symbolique des informations à afficher, en ne nécessitant que peu de place, et en gardant une flexibilité totale.

Dans un mode de réalisation particulièrement simple, les représentations symboliques associées auxdits paramètres sont des représentations à base de caractères de type numérique ou alphanumérique et ladite seconde zone d'affichage est une zone d'affichage par segments.

Dans un autre mode de réalisation avantageux de l'invention, ledit équipement téléphonique comporte:

- des moyens pour regrouper au moins certaines desdites fonctions dans un menu,
- des moyens de navigation dans ledit menu,
- des moyens de modification des paramètres affichés,
- des moyens de mise-à-jour de l'affichage dans les zones graphique et segments au fur et à mesure de la navigation dans ledit menu, et desdites modifications.

Dans un mode de réalisation particulièrement peu coûteux, enfin, un équipement téléphonique selon l'invention comporte un dispositif de commande d'écran prévu pour commander l'affichage de segments et/ou d'icônes pré-dessinées. Et de façon avantageuse, ledit écran est composé de deux substrats sur lesquels sont disposées des électrodes, et les points de ladite zone d'affichage matriciel sont répartis entre lesdites électrodes de façon à minimiser le nombre d'électrodes nécessaires pour pouvoir commander chacun des points de façon indépendante.

L'invention sera mieux comprise et d'autres détails apparaîtront à la lumière de la description qui va suivre en regard des dessins annexés qui sont donnés à titre d'exemple non limitatif est dans lesquels:

- la figure 1 représente schématiquement un exemple de téléphone selon l'invention,
- les figures 2 et 3 donnent des exemples de représentations symboliques associées aux fonctions et aux paramètres d'un équipement selon l'invention,
- la figure 4 est un schéma d'un équipement téléphonique selon l'invention sur lequel on a détaillé la partie dédiée à la commande de l'écran.
- la figure 5 représente un exemple de substrats constituant un écran d'un équipement selon l'invention.

L'invention concerne un équipement téléphonique qui est doté d'une pluralité de fonctions pour lesquelles un ou plusieurs paramètres sont susceptibles d'être fixés. De façon avantageuse, certaines au moins de ces fonctions sont regroupées dans un menu, par exemple les fonctions dont les paramètres sont réglables par l'utilisateur de l'équipement.

Les fonctions dont l'équipement est ainsi doté sont susceptibles d'être mises en oeuvre de différentes manières, et notamment:

- automatiquement par l'équipement, en fonction du contexte, par exemple suite à une action réalisée par l'utilisateur directement à partir du clavier (l'émission ou la fin d'un appel, le réglage du volume d'une communication en cours, l'accès à un répertoire téléphonique...),
- par l'intermédiaire du menu, lorsque celui-ci contient la fonction concernée.

Un menu très simplifié va maintenant être décrit à titre d'exemple pour faciliter la compréhension de l'invention. Ce menu comporte:

- une entrée REGLAGES dans laquelle sont regroupées des fonctions qui permettent de personnaliser le téléphone:

  $\rightarrow$ Type de sonnerie    $\rightarrow$ type 1
                                      $\rightarrow$ type 2
                                      $\rightarrow$ type 3
  $\rightarrow$ Volume de sonnerie $\rightarrow$ pas de sonnerie
                                      $\rightarrow$ volume faible
                                      $\rightarrow$ volume moyen
                                      $\rightarrow$ volume fort
  $\rightarrow$ Touches sonores    $\rightarrow$ oui
                                      $\rightarrow$ non
  $\rightarrow$ Rappel automatique $\rightarrow$ oui

  $\rightarrow$ non
  $\rightarrow$ ...

- une entrée SECURITE dans laquelle sont regroupées les fonctions qui permettent de protéger le téléphone contre les utilisations non-autorisées:

  $\rightarrow$ Verrouillage automatique du téléphone$\rightarrow$ oui
                                      $\rightarrow$ non
  $\rightarrow$ Verrouillage du clavier       $\rightarrow$ oui
                                      $\rightarrow$ non
  $\rightarrow$ ...

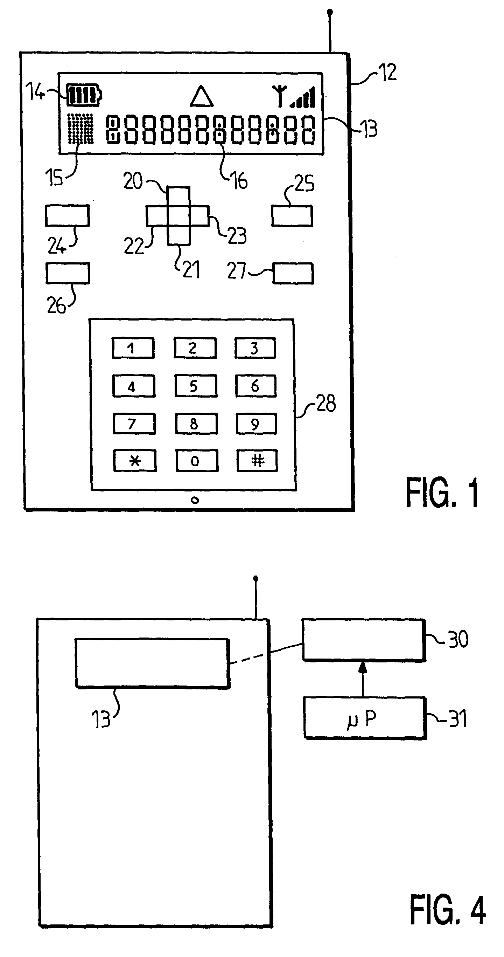

Sur la figure 1, on a représenté schématiquement un téléphone 12 selon l'invention. Ce téléphone est doté d'un écran 13 qui comporte trois zones d'affichage distinctes numérotées 14 à 16. La zone 14 regroupe quatre icônes pré-dessinées qui constituent un tableau de bord du téléphone:

- un indicateur de niveau de charge de batterie,
- un indicateur d'itinérance qui signale l'utilisation d'un réseau téléphonique autre que celui auquel l'utilisateur a souscrit,
- un indicateur de réseau pour signaler que le téléphone est connecté à un réseau,
- un indicateur de qualité de réception.

La zone 15 est une zone d'affichage matriciel par points, dite zone graphique, qui est utilisée pour afficher des représentations symboliques graphiques associées aux fonctions dont est doté l'équipement téléphonique. Dans cet exemple de réalisation, la matrice utilisée est une matrice de 9 lignes et 7 colonnes.

La zone 16 enfin est une zone d'affichage par segments, dite zone segments, qui est utilisée pour afficher une représentation à base de caractères du ou des paramètres correspondants à ladite fonction. Dans l'exemple décrit, cette zone contient 12 caractères de type 7 segments ; les premier, septième et dixième caractères de cette zone comportent deux segments de plus utilisés pour afficher un signe "+" et un délimiteur d'heure-minute-seconde ":" comme on le verra dans les exemples qui seront donnés dans la suite de la description.

Ce téléphone est également doté d'un clavier qui comporte notamment deux touches de défilement vertical 20 et 21, ainsi que deux touches de défilement horizontal 22 et 23, une touche 24 de validation/émission, une touche 25 de sortie/fin, une touche 26 d'accès au menu, une touche 27 d'accès à un répertoire et un pavé numérique 28.

Lorsqu'un utilisateur souhaite modifier le paramètre fixé pour une fonction, il entre dans le menu en appuyant sur la touche 26 d'accès au menu, puis il sélectionne l'entrée correspondante dans le menu à l'aide des touches de défilement vertical 20 et 21. La représentation symbolique graphique associée à la fonction est alors affichée dans la zone 15 de l'écran, et la représentation symbolique associée à la valeur courante du paramètre correspondant est affichée dans la zone 16. L'utilisateur peut modifier la valeur de ce paramètre en utilisant les touches de défilement horizontal 22 et 23 pour sélectionner la valeur souhaitée, et la touche de validation 24 pour la valider. Le contenu de la zone 16 est automatiquement mis à jour.

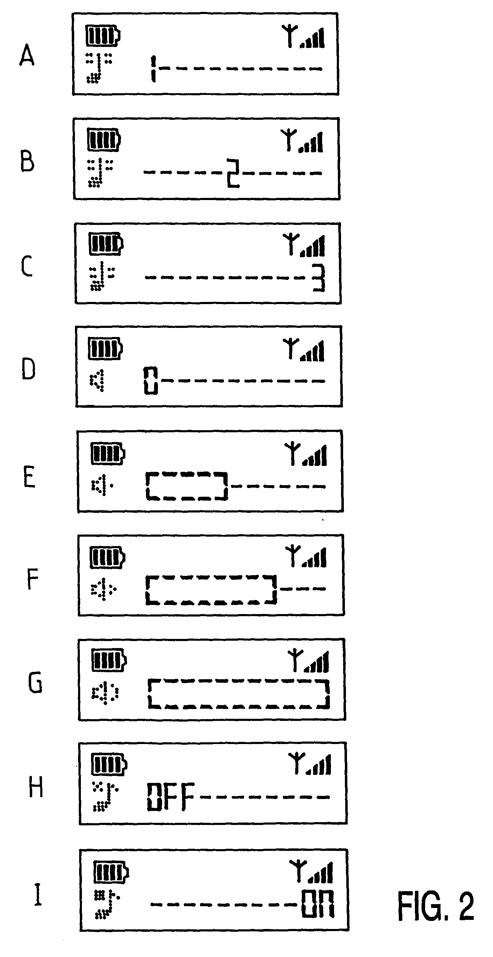

Des exemples de représentations symboliques associées aux fonctions et à leurs paramètres sont donnés sur la figure 2 pour quelques unes des fonction définies dans le menu décrit précédemment.

Sur les figures 2a à 2c on voit apparaître dans la zone graphique 15 un exemple de représentation symbolique de la fonction "Type de sonnerie", et dans la zone segments 16 un exemple de représentation symbolique du paramètre correspondant. Ce paramètre est susceptible de prendre trois valeurs identifiées par les nombres 1, 2 et 3.

Sur les figures 2d à 2g on voit apparaître dans la zone graphique 15 un exemple de représentation symbolique de la fonction "Volume de sonnerie", et dans la zone segments 16 un exemple de représentation symbolique du paramètre correspondant. Ce paramètre est susceptible de prendre quatre valeurs identifiées par quatre longueurs différentes d'une barre horizontale.

Sur les figures 2h et 2i, on voit apparaître dans la zone 15 un exemple de représentation symbolique de la fonction "Touches sonores", et dans la zone 16, un exemple de représentation symbolique du paramètre correspondant. Ce paramètre est susceptible de prendre deux valeurs identifiées par les mentions "ON" et "OFF".

De même, lorsqu'une fonction est mise en oeuvre automatiquement par l'équipement, la représentation symbolique graphique associée à cette fonction est alors affichée automatiquement dans la zone 15 de l'écran et la représentation symbolique associée à la valeur courante du paramètre correspondant est affichée dans la zone 16.

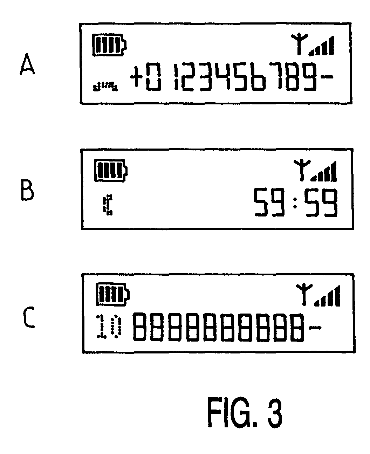

Sur la figure 3 on a représenté à titre d'exemple l'écran de l'équipement suite à la mise en oeuvre automatique de quelques fonctions.

La figure 3a correspond au cas où l'utilisateur compose un numéro de téléphone à partir du clavier, la fonction "Saisie d'un numéro" est automatiquement mise en oeuvre: une représentation symbolique graphique de cette fonction est affichée dans la zone 15 de l'écran et le numéro composé qui constitue la valeur du paramètre de cette fonction est affiché dans la zone 16 de l'écran.

La figure 3b correspond à la fonction "Appel en cours" qui permet d'afficher automatiquement à l'écran le temps écoulé pour l'appel en cours lorsqu'aucune autre information ne doit être affichée.

La figure 3c enfin correspond au cas où l'utilisateur a accédé au répertoire en appuyant sur la touche 27 d'accès au répertoire pour y sélectionner un numéro par exemple (une telle sélection se fait en appuyant sur les touches du pavé numérique correspondant au numéro de mémoire de la fiche téléphonique recherchée). Le numéro de mémoire sélectionné (qui constitue la représentation graphique de la fonction "Sélection de la mémoire n°... dans le répertoire") s'affiche alors dans la zone 15, et le numéro de téléphone associé (qui constitue la valeur du paramètre associé à cette fonction) est affiché dans la zone 16.

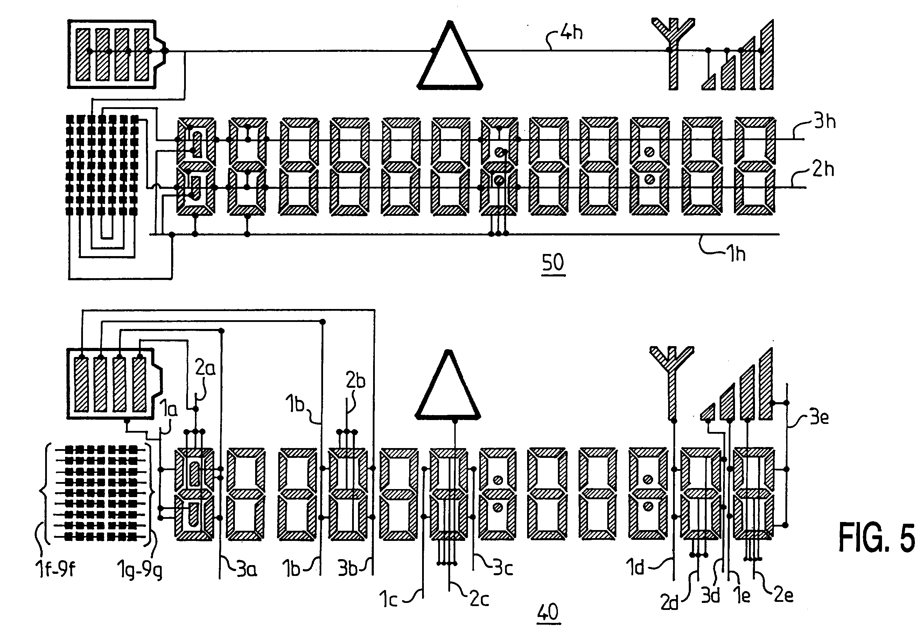

Dans un mode de réalisation particulièrement avantageux de la présente invention, et comme indiqué sur la figure 4, l'écran 13 est un écran à cristaux liquides, commandé par un dispositif de commande 30 qui est un dispositif de commande basique prévu pour commander des segments et/ou des icônes pré-dessinées, et couramment désigné par l'expression "driver segments". A titre d'exemple, on utilise le circuit PCF8576 fabriqué par Philips Semiconductors. Les caractéristiques techniques de ce circuit sont publiées dans le manuel "LCD01 Liquid Crystal Displays and Driver ICs For LCD" publié en 1991 par la société Philips. Ce dispositif de commande est lui-même contrôlé par un ensemble à microprocesseur 31.

Ce mode de réalisation présente l'avantage de permettre de réaliser l'invention à moindre coût, puisque ce type de dispositifs de commande est parmi les moins chers du marché.

Selon une autre caractéristique avantageuse de l'invention, on utilise une commande multiplexée. Ce type de commande est notamment décrit dans le manuel précité "LCD01 Liquid Crystal Displays and Driver ICs For LCD", page 24.

Sur la figure 5, on a représenté les deux substrats 40 et 50 de l'écran à cristaux liquides de la figure 1. Chacun de ces substrats est doté d'un ensemble d'électrodes prévues pour former des segments disposés en forme de "8", des icônes pré-dessinées ou une matrice de points. Le substrat 50 est constitué de quatre électrodes numérotées 1h à 4h. Sur le substrat 40, on n'a représenté que certaines des 54 électrodes nécessaires, la disposition des électrodes non représentées se déduisant immédiatement de celle des électrodes qui sont représentées. Les électrodes représentées sur le substrat 40 sont numérotées 1a-e à 3a-e, et 1f-g à 9f-g. Chaque élément de l'écran est susceptible d'être allumé en appliquant une différence de potentiel entre une électrode du substrat 40 et une électrode du substrat 50.

Le plan de répartition des éléments de l'écran entre les différentes électrodes a été établi de façon à minimiser le nombre d'électrodes. Sur le substrat 50, quatre électrodes sont nécessaires pour commander la zone de caractères et la ligne d'icônes pré-dessinées. Il est bien sûr avantageux de limiter le nombre d'électrodes de ce substrat à quatre. Pour cela, on répartit les points de la matrice de la zone 15 parmi ces quatres électrodes par groupe d'au plus 2 colonnes. Et sur le substrat 40, on divise chaque ligne de la matrice en deux parties reliées chacune à une électrode différente. Ainsi, il suffit d'utiliser 18 électrodes sur le substrat 40 et 4 électrodes sur le substrat 50 pour pouvoir commander chaque point de la matrice.

D'une façon générale, lorsque L électrodes sont nécessaires sur le substrat 50 pour commander la zone de caractères et la ligne d'icônes pré-dessinées, on cherche à limiter le nombre d'électrodes du substrat 40 à l.

Si l'on considère une matrice de p lignes et de q colonnes, et si l'on écrit p et q sous la forme $p=n_p.L-m_p$ et $q=n_q.L-m_q$ où $m_p$, et $m_q$ sont des entiers naturels les plus petits possibles, les points de la matrice sont avantageusement répartis de la façon suivante:

- si $n_p \geq n_q$, les points sont répartis entre les L électrodes du substrat 50 par groupes d'au plus $n_q$ colonnes chacun, et entre $p.n_q$ électrodes sur le substrat 40 par parties de lignes d'au plus L points chacune,
- si $n_p \leq n_q$, les points sont répartis entre les L électrodes du substrat 50 par groupes d'au plus $n_p$ lignes chacun, et entre $q.n_p$ électrodes sur le substrat 40 par parties de colonnes d'au plus L points chacune.

Il va de soi que l'invention n'est pas limitée aux modes de réalisation qui viennent d'être décrits à titre d'exemple.

En particulier d'autres menus beaucoup plus complexes, d'autres fonctions et paramètres, d'autres représentations symboliques de ces fonctions et paramètres, d'autres modes d'utilisation de l'équipement et de ses fonctions sont susceptibles d'être définis.

Par exemple, on peut choisir d'utiliser des caractères de type numérique "7 segments" ou de type alphanumérique "14 segments" pour symboliser lesdits paramètres. Ces caractères peuvent être affichés dans une zone segments comme cela a été décrit, ou dans une zone semi-graphique c'est-à-dire une zone composée de pavés matriciels de points.

Par ailleurs, d'autres dispositifs de commande d'écran sont également susceptibles d'être utilisés.

**Revendications**

1. Equipement téléphonique qui est doté d'une pluralité de fonctions pour lesquelles un ou plusieurs paramètres sont susceptibles d'être fixés, et qui comporte un écran notamment utilisé pour afficher des informations relatives auxdites fonctions et auxdits paramètres,
caractérisé en ce que:

- ledit équipement comporte des moyens pour associer une représentation symbolique auxdites fonctions et auxdits paramètres,
- et ledit écran comporte au moins une première zone d'affichage qui est une zone d'affichage matriciel par points pour afficher l'une des représentations symboliques associées auxdites fonctions, et une seconde zone d'affichage pour afficher la ou les représentations symboliques du ou des paramètres correspondants.

2. Equipement téléphonique selon la revendication 1, caractérisé en ce que les représentations symboliques associées auxdits paramètres sont des représentations à base de caractères de type numérique ou alphanumérique.

3. Equipement téléphonique selon la revendication 2, caractérisé en ce que ladite seconde zone d'affichage est une zone d'affichage par segments.

4. Equipement selon l'une des revendications 1 à 3, caractérisé en ce qu'il comporte:

- des moyens pour regrouper au moins certaines desdites fonctions dans un menu,
- des moyens de navigation dans ledit menu,
- des moyens de modification des paramètres affichés,
- des moyens de mise-à-jour de l'affichage dans lesdites première et seconde zones au fur et à mesure de la navigation dans ledit menu, et desdites modifications.

5. Equipement téléphonique selon l'une des revendications 1 à 4, caractérisé en ce qu'il comporte un dispositif de commande d'écran prévu pour commander l'affichage de segments et/ou d'icônes prédessinées.

6. Equipement téléphonique selon l'une des revendication 1 à 5, caractérisé en ce que ledit écran étant composé de deux substrats sur lesquels sont disposés des électrodes, les points de ladite première zone d'affichage sont répartis entre lesdites électrodes de façon à minimiser le nombre d'électrodes nécessaires pour pouvoir commander chacun des points de façon indépendante.

7. Equipement téléphonique selon la revendication 6, caractérisé en ce que, ladite première zone d'affichage étant formée de p lignes et de q colonnes, p et q s'écrivant sous la forme $p=n_p.L-m_p$ et $q=n_q.L-m_q$ où $m_p$ et $m_q$ sont des entiers naturels les plus petits possibles, lesdits points sont répartis entre lesdites électrodes de la façon suivante:

- si $n_p \geq n_q$, les points sont répartis entre les L électrodes de l'un desdits substrats par groupes d'au plus $n_q$ colonnes chacun, et entre $p.n_q$ électrodes sur l'autre desdits substrats par parties de lignes d'au plus L points chacune,
- si $n_p \leq n_q$, les points sont répartis entre les L électrodes de l'un desdits substrats par groupes d'au plus $n_p$ lignes chacun, et entre $q.n_p$ électrodes sur l'autre desdits substrats par parties de colonnes d'au plus L points chacune.

8. Méthode d'affichage sur un écran d'un équipement téléphonique d'informations relatives à des fonctions dudit équipement pour lesquelles un ou plusieurs paramètres sont susceptibles d'être fixés, caractérisée en ce qu'elle consiste:

   - à associer une représentation symbolique auxdites fonctions, et auxdits paramètres,
   - à afficher l'une des représentations symboliques associées auxdites fonctions dans une première zone d'affichage de l'écran, qui est une zone d'affichage matriciel par points,
   - et à afficher la ou les représentations symboliques du ou des paramètres correspondants dans une seconde zone d'affichage de l'écran.

9. Méthode d'affichage selon la revendication 8, caractérisée en ce que les représentations symboliques associées auxdits paramètres sont des représentations à base de caractères de type numérique ou alphanumérique, et ce que ladite seconde zone d'affichage est une zone d'affichage par segments.

10. Méthode d'affichage selon l'une des revendications 8 ou 9, caractérisée en ce que, ledit équipement étant doté:

    - d'un menu pour regrouper au moins certaines desdites fonctions
    - de moyens de navigation dans ledit menu,
    - de moyens de modification des paramètres affichés,
    elle consiste à mettre à jour l'affichage dans lesdites premières et secondes zones au fur et à mesure de la navigation dans ledit menu, et des modifications desdits paramètres.

FIG. 1

FIG. 4

FIG. 2

FIG. 3

FIG. 5

EP 0 862 307 A1

**Office européen des brevets** RAPPORT DE RECHERCHE EUROPEENNE

Numéro de la demande
EP 98 20 0392

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 336 104 A (SHARP KK) * page 3, ligne 45 - page 6, ligne 10; figures 1-7 * | 1-5,8-10 | H04M1/00 G06F3/147 |
| A | WO 95 25397 A (ERICSSON INC) * page 21, ligne 12 - page 24, ligne 4; figures 2,3 * * page 31, ligne 18 - page 35, ligne 16; figures 6-8 * | 1-5,8-10 | |
| A | HELMREICH R: "LESEN SIE IHR DISPLAY TELEFONKOMFORT DURCH GUTE BENUTZERFUEHRUNG" TELCOM REPORT, vol. 16, no. 3, mai 1993, pages 170-171, XP000385465 * le document en entier * | 1-5,8-10 | |
| A | PATENT ABSTRACTS OF JAPAN vol. 014, no. 062 (E-0883), 5 février 1990 & JP 01 282989 A (CANON INC) * abrégé * | 1-3,8,9 | DOMAINES TECHNIQUES RECHERCHES (Int.Cl.6) H04M G06F G09G |

Le présent rapport a été établi pour toutes les revendications

| Lieu de la recherche | Date d'achèvement de la recherche | Examinateur |
|---|---|---|
| LA HAYE | 18 mai 1998 | Delangue, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)